# EUROPÄISCHE PATENTANMELDUNG

(11) **EP 1 110 973 A1**
(43) Veröffentlichungstag der Anmeldung: **27.06.2001**
(21) Anmeldenummer: 00126450.6
(22) Anmeldetag: 07.12.2000
(51) Int. Cl.: C08C 19/20

(54) **Lösungskautschuke mit unpolaren Seitengruppen**

(30) Priorität: 20.12.1999 DE 19961522
(71) Anmelder: BAYER AG, 51368 Leverkusen (DE)
(72) Erfinder: Scholl, Thomas, Dr., 51469 Bergisch Gladbach (DE); Trimbach, Jürgen, 50859 Köln (DE)

(57) **Zusammenfassung**

Die vorliegende Erfindung betrifft Kautschuke auf Basis von Diolefinen, die dadurch gekennzeichnet sind, dass sie einen Gehalt von 0,1 bis 40 Gew.-%, bezogen auf die Gesamtmenge an Kautschuk, an unpolaren, seitenständigen, über Schwefel-Atome gebundenen, gesättigten, linearen, verzweigten oder cyclischen Kohlenwasserstoffreste mit 1 bis 22 Kohlenstoffatomen oder aromatischen Kohlenwasserstoffreste mit 6 bis 22 Kohlenstoffatomen besitzen, wobei die Kautschuke durch Polymerisation in Lösung hergestellt werden.

## Beschreibung

Die vorliegende Erfindung betrifft durch Lösungspolymerisation hergestellte Kautschuke auf Basis von Diolefinen mit unpolaren, seitenständigen, über Schwefel-Atome gebundene Kohlenwasserstoffreste (L-Dienkautschuke) sowie die Verwendung dieser Kautschuke zur Herstellung von Kautschukvulkanisaten mit verbesserter dynamischer Dämpfung, verbesserter mechanischer Festigkeit und verbessertem Abriebverhalten. Insbesondere eignen sich die erfindungsgemäßen Kautschuke zur Herstellung von hochverstärkten Kautschuk-Formkörpern, insbesondere Reifen, die eine außerordentlich thermische und mechanische Belastbarkeit, eine hohe Naßrutschfestigkeit, einen geringen Rollwiderstand und eine hohe Abriebbeständigkeit aufweisen.

Zur Herstellung von Kraftfahrzeugreifen mit geringerem Rollwiderstand, verbesserter Naßrutschfestigkeit, geringerem Abrieb und höherer thermischer Beständigkeit sind zahlreiche Wege untersucht worden. Als besonders vorteilhaft erwies sich der Einsatz von doppelbindungshaltigen anionisch polymerisierten Lösungskautschuken, wie Lösungs-Polybutadien und Lösungs-Styrol/Butadien-Kautschuke. Die Vorteile liegen u.a. in der Steuerbarkeit des Vinylgehalts und der damit verbundenen Glastemperatur, einer günstigen cis/trans-Doppelbindungs-Relation und der Molekülverzweigung. Hieraus ergeben sich in der praktischen Anwendung besondere Vorteile in der Relation von Naßrutschfestigkeit und Rollwiderstand des Reifens. So beschreibt US-A 5 227 425 die Herstellung von Reifenlaufflächen aus einem Lösungs-SBR-Kautschuk und Kieselsäure. Es war eine Aufgabe der vorliegenden Erfindung Lösungskautschuke mit einem geeigneten Gehalt an besonders kostengünstigen und wirkungsvollen Seitengruppen zur Verfügung zu stellen, die zu besseren reifentechnischen Eignschaften führen.

Verfahren zur Herstellung von hydroxyalkyl- bzw. carboxyalkyl-haltigen Lösungs-Polybutadien-Kautschuken und Lösungs-Styrol/Butadien-Kautschuke werden u.a. in DE-A 2 653 144 und EP-A 464 478 beschrieben. Bedingt durch den Gehalt an polaren Hydroxy- und Carboxylgruppen unterscheiden sich diese Kautschuke im Mischverhalten und in der Mischbarkeit von unpolaren Kautschuken.

Weiterhin ist in Rubber Plast. Age 38 (1957), Seite 592 bis 599, sowie Seite 708 bis 719 die Umsetzung von Emulsions-Polybutadienkautschuken, NBR- und SBR-Emulsionskautschuken mit Alkylmercaptanen beschrieben. Die auf diese Weise modifizierten Kautschuke werden jedoch gemäß der zitierten Literatur nur eingesetzt für ölbeständige technische Gummiartikel. Bei Verwendung dieser modifizierten SBR-Emulsionskautschuke, in Reifen und Reifenlaufflächen, stellt sich jedoch heraus, dass die zuvor beschriebenen physikalischen Eigenschaften - wenn überhaupt - nur in unzureichendem Maße erreicht werden.

Aufgabe der vorliegenden Erfindung ist es daher, Kautschuke auf Basis von Diolefinen, die durch Lösungspolymerisation hergestellt werden, zur Verfügung zu stellen, die zur Verbesserung der zuvor beschriebenen Reifen-technischen Eigenschaften führen.

Es wurde jetzt überraschenderweise gefunden, dass Lösungskautschuke aus Diolefinen mit einem bestimmten Gehalt an unpolaren gesättigten Kohlenwasserstoffresten besonders günstige Eigenschaften zur Herstellung von insbesondere Reifen besitzen.

Gegenstand der vorliegenden Erfindung sind daher Kautschuke auf Basis von Diolefinen, die dadurch gekennzeichnet sind, dass sie einen Gehalt von 0,1 bis 40 Gew.-%, bezogen auf die Gesamtmenge an Kautschuk, an unpolaren, seitenständigen, über Schwefel-Atome gebundenen, gesättigten, linearen, verzweigten oder cyclischen Kohlenwasserstoffreste mit 1 bis 22 Kohlenstoffatomen oder aromatischen Kohlenwasserstoffreste mit 6 bis 22 Kohlenstoffatomen besitzen, wobei die Kautschuke durch Polymerisation in Lösung hergestellt werden.

Bevorzugt sind erfindungsgemäß solche Kautschuke, die einen Gehalt von 0,5 bis 25 Gew.-%, bezogen auf die Gesamtmenge an Kautschuk, an den zuvor genannten unpolaren, seitenständigen, über Schwefel-Atomen gebundenen Kohlenwasserstoffreste besitzen.

Bevorzugte erfindungsgemäße Kautschuke enthalten darüberhinaus 0,1 bis 50 Gew.-%, bevorzugt 10 bis 40 Gew.-%, bezogen auf die Gesamtmenge an Kautschuk, an einpolymerisierten vinylaromatischen Monomeren.

Außerdem können die erfindungsgemäßen Kautschuke einen Gehalt an 1,2-gebundenen Diolefinen (Vinylgehalt) von 10 bis 70 Gew.-%, bevorzugt 20 bis 60 Gew.-%, und einen Gehalt an 1,4-trans-gebundenen Diolefinen von 0 bis 50 Gew.-%, bevorzugt 10 bis 40 Gew.-%, bezogen auf die Gesamtmenge an Kautschuk, besitzen.

Ganz besonders bevorzugt sind erfindungsgemäße Kautschuke, die einen Gehalt an den zuvor genannten Kohlenwasserstoffresten von 1,0 bis 15 Gew.-%, einen Gehalt an einpolymerisierten vinylaromatischen Monomeren von 10 bis 40 Gew.-%, einen Gehalt an Diolefinen von 89 bis 45 Gew.-% besitzen, wobei der Gehalt an 1,2-gebundenen Diolefinen (Vinylgehalt) im Bereich von 10 bis 60 Gew.-% und der Gehalt an 1,4-trans-gebundenen Diolefinen im Bereich von 10 bis 40 Gew.-% liegt. Die vorgenannten Gehalte beziehen sich wieder auf die Gesamtmenge an Kautschuk und ergänzen sich zu 100 Gew.-%.

Als Diolefine dienen erfindungsgemäß zum Aufbau der Kautschuke insbesondere 1,3-Butadien, Isopren, 1,3-Pentadien, 2,3-Dimethylbutadien, 1-Vinyl-1,3-butadien und/oder 1,3-Hexadien. Besonders bevorzugt sind 1,3-Butadien und Isopren.

Als vinylaromatische Monomere, die für die Polymerisation eingesetzt werden können, seien beispielsweise genannt: Styrol, o-, m- und p-Methylstyrol, p-tert.-Butylstyrol, α-Methylstyrol, Vinylnaphthalin, Divinylbenzol, Trivinylbenzol und/oder Divinylnaphthalin. Besonders bevorzugt ist Styrol.

Die erfindungsgemäßen Kautschuke besitzen Molgewichte (Zahlenmittel) von etwa 50.000 bis 2.000.000, bevorzugt 100.000 bis 1.000.000, Glastemperaturen von -110°C bis +20°C, bevorzugt -60°C bis 0°C, sowie Mooney-Viskositäten ML 1+4 (100°C) von 10 bis 200, vorzugsweise von 30 bis 150. Bei den erfindungsgemäßen Kautschuken liegt das Diolefin bevorzugt in weniger als 40 Gew.-% in 1,4-trans-Form vor, bezogen auf die Gesamtmenge an Kautschuk.

Neben den zuvor beschriebenen unpolaren Seitengruppen können die erfindungsgemäßen Kautschuke noch zusätzliche funktionelle Gruppen enthalten, die in der Kautschuktechnologie bekannt sind, beispielsweise Amino-, Carbonsäureester-, Carbonsäureamid- und/oder Sulfonsäuregruppen. Insbesondere können die erfindungsgemäßen Kautschuke Hydroxyl- und/oder Carbonsäuregruppen bzw. deren Salze enthalten, bevorzugt in einer Menge von 0,1 bis 2 Gew.-%, bezogen auf die Gesamtmenge an Kautschuk. Dieser Mengenbereich bezieht sich auch auf die anderen bekannten, aber erwähnten funktionellen Gruppen.

Die Herstellung der erfindungsgemäßen Kautschuke erfolgt durch übliche Polymerisation in Lösung in einem dafür geeigneten inerten organischen Lösungsmittel, mittels eines anionischen Katalysators, beispielsweise auf Alkalimetallbasis, wie n-Butyllithium. Bei dieser Polymerisation können zusätzlich die bekannten Randomizer und Kontrollagentien zur Kontrolle der Mikrostruktur des Kautschukes verwendet werden. Derartige anionische Lösungspolymerisationen sind bekannt und z.B. in I. Franta Elastomers and Rubber Compounding Materials; Elsevier 1989, Seite 73-74, 92-94 und in Houben-Weyl, Methoden der Organischen Chemie, Thieme Verlag, Stuttgart, 1987, Band E 20, Seite 114-134 beschrieben.

Erfindungsgemäß erfolgt die Einführung der unpolaren seitenständigen Kohlenwasserstoffgruppen in den Kautschuk bevorzugt nach erfolgter Polymerisation der eingesetzten Monomeren in dem verwendeten Lösungsmittel durch Umsetzung der erhaltenen Polymerisate bevorzugt in Gegenwart von geeigneten Radikalstartern mit Mercaptanen der nachstehenden Formel:

H-S-R,

worin
- R: für einen unpolaren gesättigten, linearen, verzweigten oder cyclischen C₁-C₂₂-Kohlenwasserstoffrest oder einen C₆-C₂₂-aromatischen Kohlenwasserstoffrest steht.

Als aromatische Mercaptane kommen sowohl solche mit einem aromatischen Kohlenwasserstoffrest, einem Arylalkylrest als auch einem Alkylarylrest in Betracht.

Die einzusetzenden Mercaptane können selbstverständlich noch substituiert sein, insbesondere bei den aromatischen Resten.

Bevorzugte Mercaptane sind Methyl-, Ethyl-, Propyl-, Butyl-, Hexyl-, Cyclohexyl, Octyl-, Decyl-, Dodecyl- und Octadecylmercaptan sowie Thiophenol. Besonders bevorzugt werden Octyl-, Decyl-, Dodecyl- und Octadecylmercaptan sowie Thiophenol.

Die Mercaptane H-S-R reagieren durch Addition an die Doppelbindungen, bevorzugt an die vinylischen Doppelbindungen des Kautschuks.

Die Bestimmung des Gehalts an Seitengruppen (II) kann nach bekannten Methoden, wie z.B. Spektroskopie oder Elementaranalyse erfolgen.

Erfindungsgemäß kann man die Reaktion der Mercaptane mit den Lösungskautschuken in einem inerten Lösungsmittel, beispielsweise Kohlenwasserstoffen, wie Pentan, Hexan, Cyclohexan, Benzol und/oder Toluol, durchführen bei Temperaturen von ca. 40 bis 150°C in Gegenwart von Radikalstartern, z.B. Peroxiden, insbesondere Acylperoxiden, wie Dilauroylperoxid und Dibenzoylperoxid, und Ketalperoxiden, wie Di-tert.butylperoxi-trimethylcyclohexan, ferner mittels Azoinitiatoren, wie Azobisisobutyronitril, Benzpinakolsilylethern oder in Gegenwart von Photoinitiatoren und sichtbarem oder UV-Licht.

Die erfindungsgemäßen Kautschuke können selbstverständlich auch die in der Kautschukindustrie bekannten und verwendeten Füllstoffe enthalten; diese umfassen sowohl die aktiven als auch die inaktiven Füllstoffe. Zu erwähnen sind:
- hochdisperse Kieselsäuren, hergestellt z.B. durch Fällung von Lösungen von Silikaten oder Flammenhydrolyse von Siliciumhalogeniden mit spezifischen Oberflächen von 5 - 1000, vorzugsweise 20-400 m2/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-,Ti-oxiden vorliegen;
- synthetische Silikate, wie Aluminiumsilikat, Erdalkaisilikat wie Magnesiumsilikat oder Calciumsilikat, mit BET-Oberflächen von 20-400 m2/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Ruße. Die hierbei zu verwendenen Russe sind nach dem Flammruß, Furnaceoder Gasrußverfahren hergestellt und besitzen BET-Oberflächen von 20 - 200m2/g, z.B. SAF-, ISAF-, HAF-, FEF- oder GPF-Ruße;
- Kautschukgele
- Gummi-Pulver, welches beispielsweise durch Mahlung von Kautschukvulkanisaten erhalten wurde

Bevorzugt werden als Füllstoffe eingesetzt hochdisperse Kieselsäuren und/oder Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen , wie hochdispersen Kieselsäuren, und Russen, wobei das Mischungsverhältnis von hellen Füllstoffen zu Russen bei 1:0,05 bis 20, bevorzugt 1:0,1 bis 10 liegt.

Selbstverständlich können die erfindungsgemäßen Kautschuke noch mit anderen als den zuvor beschriebenen Kautschuken abgemischt werden, z.B. mit Naturkautschuk sowie Synthesekautschuken.

Bevorzugte Synthesekautschuke sind beispielsweise bei W. Hofmann, Kautschuktechnologie, Gentner Verlag, Stuttgart 1980 und I. Franta, Elastomers and Rubber Coumpounding Materials , Elsevier, Amsterdam 1989 beschrieben. Sie umfassen u.a.
- BR -: Polybutadien
- ABR -: Butadien/Acrylsäure-C 1-4-alkylester-Copolymere
- CR: Polychloropren
- IR -: Polyisopren
- SBR -: Styrol/Butadien-Copolymerisate mit Styrolgehalten von 1-60, vorzugsweise 20-50 Gew. %
- IIR -: Isobutylen/Isopren-Copolymerisate
- NBR -: Butadien/Acrylnitril-Copolmere mit Acrylnitrilgehalten von 5-60, vorzugsweise 10-40 Gew. %
- HNBR -: teilhydrierter oder volllständig hydrierter NBR-Kautschuk
- EPDM -: Ethylen/Propylen/Dien-Copolymerisate
sowie Mischungen dieser Kautschuke. Für die Herstellung von Kfz-Reifen sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen nach EP-A 447 066 modifiziert sein können, Polybutadienkautschuk mit hohem 1,4-cis-Gehalt (> 90 %), der mit Katalysatoren auf Basis Ni, Co, Ti oder Nd hergestellt wurde, sowie Polybutadienkautschuk mit einem Vinylgehalt von bis zu 75 % sowie deren Mischungen von Interesse.

Selbstverständlich können die erfindungsgemäßen Kautschukmischungen noch andere Kautschukhilfsmittel enthalten, die beispielsweise der weiteren Vernetzung der aus den Kautschukmischungen hergestellten Vulkanisate dienen, oder die die physikalischen Eigenschaften der aus den erfindungsgemäßen Kautschukmischungen hergestellten Vulkanisate für deren speziellen Einsatzzweck verbessern.

Als zusätzliche Vernetzeragentien werden Schwefel oder Schwefel-liefernde Verbindungen oder Peroxide eingesetzt. Besonders bevorzugt werden Schwefel oder Schwefel-liefernde Verbindungen in Mengen von 0,01 bis 3 Gew. Teile bezogen auf Kautschuk. Darüber hinaus können, wie erwähnt, die erfindungsgemäßen Kautschukmischungen weitere Hilfsmittel, wie die bekannten Reaktionsbeschleuniger, Alterungsschutzmittel, Wärmestabilisatoren, Lichtschutzmittel, Ozonschutzmittel, Verarbeitungshilfsmittel, Verstärkerharze, z.B. Phenolharze, Stahlcord-Haftmittel, wie z.B. Kieselsäure/Resorcin/Hexamethylentetramin oder Cobalt-Naphtennat, Weichmacher, Tackifier, Treibmittel, Farbstoffe, Pigmente, Wachse, Streckmittel, organische Säuren, Verzögerer, Metalloxide sowie Aktivatoren, enthalten.

Die erfindungsgemäßen Kautschukhilfsmittel werden in den üblichen, bekannten Mengen eingesetzt, wobei sich die eingesetzte Menge nach dem späteren Verwendungszweck der Kautschukmischungen richtet. Üblich sind beispielsweise Mengen an Kautschukhilfsmitteln im Bereich von 2 bis 70 Gew.-Teilen, bezogen auf 100 Gew.-Teile Kautschuk.

Wie zuvor erwähnt, können den erfindungsgemäßen Kautschuke noch zusätzliche Kautschuke zugemischt werden. Deren Menge liegt üblicherweise im Bereich von 0,5 bis 70, bevorzugt 10 bis 50 Gew.-%, bezogen auf die gesamte Kautschukmenge in der Kautschukmischung. Die Menge an zusätzlich zugegebenen Kautschuken richtet sich wieder nach dem jeweiligen Verwendungszweck der erfindungsgemäßen Kautschukmischungen.

Für die erfindungsgemäßen Kautschukmischungen, die mit hochaktiven Kieselsäuren gefüllt sind, ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie sie in DE-A 2 141 159 und DE-A 2 255 577 beschrieben sind. Darüber hinaus kommen in Frage oligomere und/oder polymere schwefelhaltige Silylether entsprechend der Beschreibung in DE-A 4 435 311 und EP-A 670 347. Außerdem sind einzusetzen Mercapatoalkyltrialkoxisilane, insbesondere Mercaptopropyltriethoxisilan und Thiocyanatoalkylsilylether (siehe DE-A 19 544 469), aminogruppenhaltige Silylether, wie z.B. 3-Aminopropyltriethoxisilan und N-Oleyl-N-propyltrimethoxisilan sowie Trimethylolpropan. Die Füllstoffaktivatoren werden in üblichen Mengen eingesetzt, d.h. in Mengen von 0,1 bis 15 Gew.-Teile, bezogen auf 100 Gew.-Teile Kautschuk.

Die erfindungsgemäßen Kautschukmischungen können z.B. hergestellt werden durch Abmischung der unpolare Seitengruppen tragende erfindungsgemäßen Lösungskautschuke mit den entsprechenden Füllstoffen und schwefelfreien Vernetzern in geeigneten Mischapparaturen, wie Knetern, Walzen oder Extrudern.

Ein weiterer Gegenstand der vorliegenden Erfindung ist die Verwendung der erfindungsgemäßen Kautschukmischungen zur Herstellung von Vulkanisaten, die wiederum für die Herstellung von hochvcrstärkten Kautschuk-Formkörpern, insbesondere für die Herstellung von Reifen, dienen.

### Beispiel 1

Eine Lösung von 500 g Lösungs-SBR-Kautschuk, Buna VSL 5025-0 (Bayer AG, Gehalt an gebundenem Styrol 25 Gew. %, Gehalt an 1.2-gebundenem Butadien 50 Gew. %) in 4 1 Cyclohexan wurde bei 80°C mit 25 g Stearylmercaptan und 1 g Dilauroylperoxid versetzt. Anschließend rührte man 6 Stunden bei 80°C nach. Dann setzte man 2,5 g Stabilisator Vulkanox® 4020 (Bayer AG) hinzu und destillierte das Lösungsmittel mit Wasserdampf ab. Nach dem Trocknen bei 70°C im Vakuum erhielt man 526 g eines farblosen Kautschuks mit der Mooneyviskosität ML 1+4 (100°C) 100. S-Gehalt: 0,5 Gew.-%. Gehalt an -S-C₁₈H₃₇-Gruppen: 4,8 Gew. %. Gehalt an 1,4-trans-gebundenen Butadien: 14 Gew.-%, Gehalt an 1,2-gebundenem Butadien: 45 Gew.-% (bestimmt mittels FT-IR). Glastemperatur: - 18°C.

### Beispiele 2 - 7:

Es wurde wie in Beispiel 1 verfahren, wobei die dort eingesetzten 25 g Stearylmercaptan durch die in folgender Tabelle genannten Mengen an Alkylmercaptanen ersetzt wurden:

| ***Beispiel- Nr.*** | ***Mercaptan*** | ***Gehalt an -S-Alkylgruppen im Endprodukt*** | ***Glas- temperatur*** |
|---|---|---|---|
| 2 | 12,5 g Stearylmercaptan | 2,4 Gew. % | -17° C |
| 3 | 12,5 g 1-Dodecylmercaptan | 2,4 Gew. % | -17° C |
| 4 | 25 g 1-Dodecylmercaptan | 4,8 Gew. % | -16° C |
| 5 | 12,5 g 1-Octylmercaptan | 2,4 Gew. % | -16° C |
| 6 | 25 g 1-Octylmercaptan | 4,8 Gew. % | -15° C |
| 7 | 12,5 g 1-Butylmercaptan | 4,8 Gew. % | -14° C |

Der Gehalt an 1,4-trans-gebundenen Butadien betrug jeweils ca. 14 Gew.-%.

### Beispiel 8

Die folgenden Substanzen wurden in einem 1,5 1 Kneter (Drehzahl 60 UpM, Füllgrad 65 %, Starttemperatur 70°C, Dauer: 5 Minuten) gemischt. Anschließend wurden die Mischungen entnommen und Schwefel und Beschleuniger auf einer Walze bei 40°C Walzentemperatur zugemischt

| **Mischungsbestandteile:** | **Vergleich 8A** | **Beispiel 8.1** | **Beispiel 8.2** | **Beispiel 8.3** |
|---|---|---|---|---|
| im 1,5l Kneter wurden gemischt: | | | | |
| Lösungs-SBR Buna VSL 5025-0 (Bayer AG) | 70 | 0 | 0 | 0 |
| Lösungs--SBR gemäß Beispiel 1 | 0 | 70 | 0 | 0 |
| Lösungs-SBR gemäß Beispiel 3 | 0 | 0 | 70 | 0 |
| Lösungs-SBR gemäß Beispiel 5 | 0 | 0 | 0 | 70 |
| Polybutadienkautschuk Buna CB 24 | 30 | 30 | 30 | 30 |
| (Bayer AG) | | | | |
| Kieselsäure Vulkasil S (Bayer AG) | 70 | 70 | 70 | 70 |
| Stearinsäure | 1 | 1 | 1 | 1 |
| Zinkoxid RS (Bayer AG) | 2,5 | 2,5 | 2,5 | 2,5 |
| aromat. Mineralöl Enerthene 1849-1 (BP) | 37,5 | 37,5 | 37,5 | 37,5 |
| Ozonschutzwachs Antilux 654 (Rheinchemie) | 1,5 | 1,5 | 1,5 | 1,5 |
| Alterungsschutzmittel Vulkanox 4020 (Bayer) | 1 | 1 | 1 | 1 |
| Bis-(triethoxisilylpropyl)-tetrasulfid Si 69 | 5,6 | 5,6 | 5,6 | 5,6 |
| (Degussa) | | | | |

| auf der Walze wurde zugemischt: | | | | |
|---|---|---|---|---|
| Sulfenamidbeschleuniger Vulkacit CZ (Bayer ) | 1,8 | 1,8 | 1,8 | 1,8 |
| Guanidinbeschleuniger Vulkacit D (Bayer ) | 2 | 2 | 2 | 2 |
| Schwefel | 1,5 | 1,5 | 1,5 | 1,5 |
| Mischungsviskosität ML 1+4 (100°C) | 40 | 45 | 47 | 45 |
| Die Mischungen werden bei 170 C vulkanisiert | | | | |
| Vulkanisationszeit: 20 Minuten | | | | |

| **Vulkanisateigenschaften:** | | | | |
|---|---|---|---|---|
| Spannungswert bei 100 % Dehnung (MPa) | 2,3 | 2,1 | 2,2 | 2,2 |
| Spannungswert bei 300 % Dehnung (MPa) | 8,4 | 8,6 | 8,6 | 8,6 |
| Zugfestigkeit (MPa) | 15,5 | 16 | 15,6 | 16,6 |
| Bruchdehnung (%) | 460 | 450 | 450 | 470 |
| Härte bei 23°C (Shore A) | 64 | 63 | 62 | 63 |
| Rückprallelastizität bei 23°C (%) | 32 | 31 | 32 | 31 |
| Rückprallelastizität bei 70°C (%) | 53 | 54 | 55 | 54 |
| Differenz zwischen Rückprallelastizität bei | | | | |
| 23° und 70° C | 21 | 23 | 23 | 23 |
| Weiterreißwiderstand in N/mm (DIN 52.515) | 21,5 | 31,9 | 32 | 40,9 |
| Abrieb in ccm (DIN 53 516) | 78 | 61 | 62 | 61 |

Die Prüfergebnisse belegen die durch die unpolaren Seitengruppen erzielten verbesserten mechanischen Eigenschaften der erfindungsgemäßen Lösungskautschuke, insbesondere zeigen sich deutliche Vorteile im Abriebsverhalten, der Weiterreißfestigkeit sowie in der dynamischen Dämpfung.

## Patentansprüche

1. Kautschuke auf Basis von Diolefinen, dadurch gekennzeichnet, dass sie einen Gehalt von 0,1 bis 40 Gew.-%, bezogen auf die Gesamtmenge an Kautschuk, an unpolaren, seitenständigen, über Schwefel-Atome gebundenen, gesättigten, linearen, verzweigten oder cyclischen Kohlenwasserstoffreste mit 1 bis 22 Kohlenstoffatomen oder aromatischen Kohlenwasserstoffreste mit 6 bis 22 Kohlenstoffatomen besitzen, wobei die Kautschuke durch Polymerisation in Lösung hergestellt werden.

2. Kautschuke gemäß Anspruch 1, dadurch gekennzeichnet, dass die Kautschuke 0,1 bis 50 Gew.-%, bezogen auf die Gesamtmenge an Kautschuk, an einpolymerisierten vinylaromatischen Monomeren enthalten.

3. Kautschuke gemäß Anspruch 1, dadurch gekennzeichnet, dass die Kautschuke einen Gehalt an 1,2-gebundenen Diolefine von 10 bis 70 Gew.-%, bezogen auf die Gesamtmenge an Kautschuk, enthalten.

4. Kautschuke gemäß Anspruch 1, dadurch gekennzeichnet, dass die Kautschuke 0,1 bis 2 Gew.-%, bezogen auf die Gesamtmenge an Kautschuk, an seitenständigen Hydroxylgruppen und/oder Carboxylgruppen enthalten.

5. Kautschuke gemäß Anspruch 1, dadurch gekennzeichnet, dass sie 10 bis 800 Gew.-Teile an Füllstoffen, bezogen auf 100 Gew.-Teile an Kautschuk, sowie gegebenenfalls Naturkautschuk und andere Synthesekautschuke, Kautschukhilfsmittel sowie Vernetzer enthalten.

6. Verwendung der Kautschuke nach Anspruch 1 zur Herstellung von hochverstärkten Kautschuk-Formkörpern, insbesondere zur Herstellung von Reifen.
